(19) Europäisches Patentamt
European Patent Office
Office européen des brevets

(11) Publication number: 0 457 374 A2

(12) # EUROPEAN PATENT APPLICATION

(21) Application number: **91200271.4**

(51) Int. Cl.$^5$: **C08L 73/00**

(22) Date of filing: **08.02.91**

(30) Priority: **12.02.90 US 479019**

(43) Date of publication of application: **21.11.91 Bulletin 91/47**

(84) Designated Contracting States: **BE DE FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Machado, Joseph Michael**
**2315 Wren Meadow Road**
**Richmond, Texas 77469(US)**

(74) Representative: **Tuijn, Jan Warnaar et al**
**Shell Internationale Research Maatschappij B.V., Patents, Licensing & Trade Marks Division, P.O. Box 302**
**NL-2501 CH The Hague(NL)**

(54) **Polyketone polymer blends comprising a linear alternating polymer of carbon monoxide and ethylenically unsaturated compounds.**

(57) A polymer blend composition comprising:
(1) a linear alternating polymer of carbon monoxide and at least one ethylenically unsaturated compound;
(2) a toughened polymer blend including:
(A) a graft rubber composition comprising a substrate rubber having a glass transition temperature below 0°C and monomers comprising a vinyl aromatic monomer and one or more polar monomers selected from the group consisting of $C_1$ to $C_4$ alkyl acrylates, $C_1$ to $C_4$ alkyl methacrylates, methacrylonitrile and acrylonitrile, said monomers having been polymerized in the presence of and grafted on to the substrate rubber;
(B) a polyamide;
(C) a carboxylic acid containing ethylene/alkyl acrylate copolymer rubber having a glass transition temperature below 20°C.

EP 0 457 374 A2

# POLYKETONE POLYMER BLENDS COMPRISING A LINEAR ALTERNATING POLYMER OF CARBON MONOXIDE AND ETHYLENICALLY UNSATURATED COMPOUNDS

This invention relates to an improved polymer blend comprising a linear alternating polymer of carbon monoxide and at least one ethylenically unsaturated compound.

The class of polymers of carbon monoxide and ethylenically unsaturated compounds has been known for some time. More recently, the class of linear alternating polymers of carbon monoxide and at least one ethylenically unsaturated compound has become of greater interest in part because of the greater availability of the polymers. The more recent processes for the preparation of such polymers, now becoming known as polyketones or polyketone polymers, are known from, e.g., EP-A 121,965, EP-A 181,014, EP-A 213,671, and EP-A 257,663.

The resulting polymers are relatively high molecular weight materials having utility as premium thermoplastics in the production of shaped articles such as containers for food and drink and parts for the automotive industry which are produced by processing the polyketone polymer according to well known methods. For some particular applications however, it has been found to be desirable to have properties which are somewhat different from those of the polyketone polymer. It would be of advantage and it is the aim of the present invention to retain the more desirable properties of the polyketone polymer and yet improve other properties, in particular, toughness and stiffness.

It has been found that polyketone polymer compositions with improved toughness, in particular improved notch sensitivity, and, surprisingly, also improved stiffness can be obtained by blending (1) the linear alternating polymer with (2) a toughened blend of polyamide and a graft rubber (such as acrylonitrile-butadiene-styrene graft copolymer) with a compatibilizing system of a rubbery acid-functionalized copolymer, and, optionally, a hard acid-functionalized copolymer. Optionally, (3) an acidic polymer containing moieties of an $\alpha$-olefin and an $\alpha$,B-ethylenically unsaturated carboxylic acid, optionally containing a third polymerizable monomer and wherein, optionally, a portion of the carboxylic acid groups are neutralized with non-alkali metal, may be present too.

Accordingly, the invention relates to a polymer blend composition comprising:

(1) a linear alternating polymer of carbon monoxide and at least one ethylenically unsaturated compound;

(2) a toughened polymer blend including:

(A) a graft rubber composition comprising a substrate rubber having a glass transition temperature below 0°C and monomers comprising a vinyl aromatic monomer and one or more polar monomers selected from the group consisting of $C_1$ to $C_4$ alkyl acrylates, $C_1$ to $C_4$ alkyl methacrylates, methacrylonitrile and acrylonitrile, said monomers having been polymerized in the presence of and grafted on to the substrate rubber;

(B) a polyamide;

(C) a carboxylic acid containing ethylene/alkyl acrylate copolymer rubber having a glass transition temperature below 20°C; and, optionally,

(D) a carboxylic acid containing terpolymer having a glass transition temperature above 0°C; and optionally,

(3) a minor portion of an acidic polymer incorporating moieties of an $\alpha$-olefin, an $\alpha,\beta$-ethylenically unsaturated carboxylic acid and optionally a non-acidic, low molecular weight polymerizable monomer, the acidic polymer optionally having a portion of the carboxylic acid groups neutralized with non-alkali metal.

The invention also relates to a process for improving the toughness and stiffness of a linear alternating polymer of carbon monoxide and at least one olefinically unsaturated compound by forming a uniform blend thereof with the toughened polymer blend of the invention and, optionally, the acidic polymer of the invention.

The polyketone polymers of the blends of the invention are of a linear alternating structure and contain substantially one molecule of carbon monoxide for each molecule of ethylenically unsaturated compound. Eligible ethylenically unsaturated compounds for use as precursors of the polyketone polymers are, for example, hydrocarbons or esters, such as acrylates or vinylesters. Preferably, they are hydrocarbons having up to 20 carbon atoms inclusive, more preferably up to 10 carbon atoms, and are aliphatic such as ethylene and other $\alpha$-olefins including propylene, 1-butene, isobutylene, 1-hexene, 1-octene and 1-dodecene, or are arylaliphatic containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. The preferred polyketone polymers are copolymers of carbon monoxide and ethylene or terpolymers of carbon monoxide,

ethylene and a second ethylenically unsaturated hydrocarbon of at least 3 carbon atoms, particularly an α-olefin such as propylene.

When the preferred polyketone terpolymers are employed as the major polymeric component of the blends of the invention, there will be within the terpolymer at least 2 units incorporating a moiety of ethylene for each unit incorporating a moiety of the second hydrocarbon. Preferably, there will be from 10 units to 100 units incorporating a moiety of ethylene for each unit incorporating a moiety of the second hydrocarbon. The polymer chain of the preferred polyketone polymers is therefore represented by the repeating formula

$$-[CO-(CH_2-CH_2)]_x-[CO-(G)]_y- \qquad (I)$$

wherein G is the moiety of ethylenically unsaturated hydrocarbon of at least 3 carbon atoms polymerized through the ethylenic unsaturation, x and y are integers, y can be zero, and the ratio of y:x is no more than 0.5. When copolymers of carbon monoxide and ethylene are employed in the blends of the invention, there will be no second hydrocarbon present and the copolymers are represented by the above formula I wherein y is zero. When y is other than zero, i.e., terpolymers are employed, the

$$-CO-(CH_2CH_2)-$$

units and the

$$-CO-(G)-$$

units are found randomly throughout the polymer chain, and preferred ratios of y:x are from 0.01 to 0.1. The end groups or "caps" of the polymer chain will depend upon the materials present during the production of the polymer and whether or how the polymer was purified. The precise nature of the end groups does not appear to influence the properties of the polymer to any considerable extent so that the polymers are fairly represented by the formula for the polymer chain as depicted above.

Of particular interest are the polyketone polymers of number average molecular weight from 1000 to 200,000, particularly those of number average molecular weight from 20,000 to 90,000 as determined by gel permeation chromatography. The physical properties of the polymer will depend in part upon the molecular weight, whether the polymer is a copolymer or a terpolymer and, in the case of terpolymers, the nature of the proportion of the second olefinically unsaturated compound present. Typical melting points for the polymers are from 175 °C to 300 °C, more typically from 210 °C to 270 °C. The polymers have a limiting viscosity number (LVN), measured in m-cresol at 60 °C in a standard capillary viscosity measuring device, from 0.5 dl/g to 10 dl/g, more frequently from 0.8 dl/g to 4 dl/g.

Methods for the preparation of the polyketone polymers are known from the European Patent applications mentioned hereinbefore. They can be prepared by contacting carbon monoxide and the ethylenically unsaturated compound(s) under polymerization conditions in the presence of a catalyst composition formed from a compound of palladium, the anion of a non-hydrohalogenic acid having a pKa (measured in water at 18 °C) of below 6, preferably below 2, and a multidentate ligand of phosphorus, nitrogen or sulphur. The scope of the polymerization is extensive but, without wishing to be limited, a preferred palladium compound is a palladium carboxylate, particularly palladium acetate, a preferred anion is the anion of trifluoroacetic acid or p-toluenesulfonic acid and a preferred ligand is 1,3-bis-(diphenylphosphino)propane or 1,3-bis[bis(2-methoxyphenyl)phosphino]propane.

The components of the toughened blend, which is present in the blend of the invention as the second component, include:

(A) a graft rubber component comprising a substrate rubber having a glass transition temperature below 0 °C and monomers comprising a vinyl aromatic monomer and one or more polar monomers selected from the group consisting of $C_1$ to $C_4$ alkyl acrylates, $C_1$ to $C_4$ alkyl methacrylates, methacrylonitrile and acrylonitrile, said monomers having been polymerized in the presence of and grafted on to the substrate rubber;

(B) a polyamide;

(C) a carboxylic acid containing acrylate copolymer rubber having a glass transition temperature below 20 °C.; and, optionally,

(D) a carboxylic acid containing terpolymer having a glass transition temperature above 0°C.

The amounts of the components present in the toughened blend is not important. Preferably, the weight ratio of component (A) to component (B) in the toughened blend is in the range of from 1:9 to 9:1, the sum of components (A) and (B) is at least 60% by weight of the toughened blend, the amount of component (C) is in the range of 1 to 40% by weight of the toughened blend, and the amount of optional component (D) is in the range of from 0 to 39% by weight of the toughened blend.

Component A of the toughened blend is a graft rubber composition which includes a substrate rubber grafted with a vinyl aromatic monomer and polar monomers, as indicated hereinbefore. Preferably, the graft rubber component comprises from 5 to 80% by weight of the substrate rubber and from 95 to 20% by weight of the monomers comprising, per 100 parts by weight of monomers, from 20 to 75 parts by weight of the vinyl aromatic monomer and from 80 to 25 parts by weight of the polar monomer(s) selected from the group consisting of $C_1$ to $C_4$ alkyl acrylates, $C_1$ to $C_4$ alkyl methacrylates, methacrylonitrile and acrylonitrile, said monomers having been polymerized in the presence of and grafted on to the substrate rubber.

The substrate rubber component of the graft rubber is conventionally a diene rubber or hydrogenated diene rubber such as polybutadiene, hydrogenated polybutadiene, a polymer of butadiene with a comonomer such as styrene or acrylonitrile which polymer contains at least 50% and preferably 80% by weight of butadiene, or a butadiene-based block or radial-block polymer. However, the substrate rubber does not need to be the conventional polybutadiene or butadiene/styrene copolymer since any rubber with a glass transition temperature below 0°C, such as EPDM rubber, polypentenamer, polyisoprene, polychloroprene, polyacrylate rubbers and the like can be used. Preferably, if the rubber is a polyacrylate, it contains a minor amount, up to 5% weight of an interpolymerized monomer such as allyl acrylate to provide unsaturation and enhance grafting.

Vinyl aromatic monomers used for the graft rubber include styrene and substituted styrenes such as alpha-methylstyrene, chlorostyrene, bromostyrene, p-methylstyrene, and vinyltoluene. The preferred vinyl aromatic monomer is styrene. Suitable polar monomers include acrylonitrile, methacrylonitrile, $C_1$ to $C_4$ alkyl acrylate, $C_1$ to $C_4$ alkyl methacrylate, or a mixture of these monomers. Preferred polar monomers are acrylonitrile, methacrylonitrile, and methyl methacrylate. The weight ratio of vinyl aromatic monomer to polar monomer in the graft rubber is preferably in the range of 75:25 to 20:80 and the weight percent of the rubber component is in the range of 5 to 80% of the total weight of the graft rubber and more preferably 5 to 60%. When the vinyl aromatic monomer is styrene and the polar monomer is acrylonitrile, a more preferred weight ratio of styrene to acrylonitrile is in the range of 75:25 to 50:50.

Component B of the toughened blend is a polyamide. By the term "polyamide" is meant a polymeric condensation product which contains recurring amide linkages as part of the polymeric chain. These polyamide polymers are well known in the art and are often referred to as nylons. Suitable polyamide polymers for use in the toughened blend are crystalline or amorphous polymers of linear or branched structure and having a molecular weight of at least 5000.

In one embodiment of the polyamide toughened blend component, the polyamide polymer is homopolymeric in character, illustratively being a homopolymer of a terminal aminocarboxylic acid of up to 16 carbon atoms inclusive. Although the homopolymeric polyamide is often referred to as a monopolymer of an aminocarboxylic acid for purposes of convenience and clarity, it should be appreciated that in practice the monomeric unit is provided as the aminocarboxylic acid, as a lactam or in some other equivalent form. In many instances, the monomer is provided as the lactam, e.g., butyrolactam, caprolactam or lauryllactam. Of these homopolymeric polyamide polymers, polycaprolactam is preferred for use in the blends of the invention. These polymers are often identified by the number of carbon atoms in the recurring unit. For example, the homopolymeric polyamide illustratively produced from caprolactam is termed polyamide 6.

In an alternate embodiment of the polyamide toughened blend component, the polyamide is copolymeric in character and is illustratively represented as a condensation product of a primary diamine and a dicarboxylic acid. The primary diamines may be acyclic terminal primary diamines, particularly, those diamines of the formula

$$H_2N-(-CH_2-)_n-NH_2 \qquad (II)$$

wherein n is an integer from 2 to 16 inclusive. Such polymethylenediamines include trimethylenediamine, tetramethylenediamine, hexamethylenediamine, decamethylenediamine and dodecamethylenediamine. Of these diamines, the use of hexamethylenediamine as precursor of the copolymeric polyamide blend component is preferred.

The dicarboxylic acids may be the acyclic straight-chain dicarboxylic acids, particularly those dicarboxylic acids of the formula

$$HO_2C-(CH_2)_m-CO_2H \qquad (III)$$

wherein m is an integer from 0 to 14 inclusive. Illustrative of these dicarboxylic acids are oxalic acid, pimelic acid, sebacic acid, suberic acid, azelaic acid, adipic acid and undecanedioic acid. Particularly preferred as the dicarboxylic acid precursor of the copolymeric polyamide blend component are adipic acid and azelaic acid.

The production of the copolymeric polyamide blend component is well known and conventional in the art. The copolymeric polyamide polymers are also identified by the number of carbon atoms in the diamine and dicarboxylic acid precursors. For example, the condensation product illustratively produced from hexamethylenediamine and azelaic acid is termed polyamide 6,9 and the polyamide illustratively produced from hexamethylenediamine and adipic acid is termed polyamide 6,6.

The preferred polyamide polymer is selected from the group consisting of polyamide 6, polyamide 6,6, polyamide 6,9, and a random copolymer of polyamide 6,6 and polyamide 6. A more preferred polyamide polymer is polyamide 6. The number average molecular weight of the polyamide is preferably selected in the range of 5,000 to 35,000, and most preferably in the range of 8,000 to 20,000.

Component C of the toughened blend is a carboxylic acid containing ethylene/alkyl acrylate copolymer rubber, wherein the rubber has a glass transition temperature below 20 °C, preferably below 0 °C. The carboxylic acid groups are meant to include carboxylic anhydrides and are capable of reacting with the polyamide through its terminal amine groups. Suitable carboxylic acid containing acrylic copolymer rubbers include rubbery ethylenically unsaturated carboxylic acid-acrylic ester copolymers containing 0.5 to 25% by mole of an interpolymerized carboxylic acid containing monomer selected from acrylic and methacrylic acid, $C_1$ to $C_{12}$ monoalkyl esters of ethylenically unsaturated diacids such as monomethyl maleate and mono-dodecyl fumarate, ethylenically unsaturated dicarboxylic acids, such as fumaric acid, maleic acid, itaconic acid, aconitic acid or citraconic acid, and anhydrides thereof, such as maleic, itaconic, aconitic or citraconic anhydride. They are distinguished by their acid functionality from polyacrylate rubbers which generally are essentially non-functionalized acrylic ester polymers.

Suitable rubbers include acrylic acid-acrylic ester-α-olefin terpolymers which are essentially non-crystalline and have glass transition temperatures below 20 °C, preferably below 0 °C. Preferred rubbers are polymers of ethylene, $C_1$ to $C_4$ alkyl acrylate and monoethyl maleate or acrylic acid. More preferred acid functional rubbers are polymers comprising at least 50% by mole of ethylene, 10 to 49.5% by mole $C_1$ to $C_4$ alkyl acrylate, and 0.5 to 10% by mole monoethyl maleate or acrylic acid.

The acid-containing acrylate copolymer rubber is effective to improve impact resistance in the toughened blend in the range of 1 to 40% by weight. The preferred amount of acrylate copolymer rubber in the toughened blend is from 5 to 18% by weight to provide enhanced impact properties.

Component D, optionally included in the toughened blend, is a carboxylic acid containing terpolymer having a glass transition temperature above 0 °C and is typically a polymer of a vinyl aromatic monomer of the types which may be included in the Component A copolymerized with carboxylic acid functional monomers and one or more polar monomers selected from the group consisting of acrylonitrile, methacrylonitrile, $C_1$ to $C_4$ alkyl methacrylate and $C_1$ to $C_4$ alkyl acrylate. Preferred polar monomers are acrylonitrile, methacrylonitrile, methyl acrylate, and methyl methacrylate.

Component D contains copolymerized comonomers containing carboxylic acid groups capable of reacting with the amine of the polyamide. The carboxylic acid groups are meant to include carboxylic anhydrides. The carboxylic acid groups are typically provided by one or more monomers selected from acrylic and methacrylic acid, $C_1$ to $C_{12}$ monoalkyl esters of ethylenically unsaturated dicarboxylic acids such as monomethyl maleate and mono-dodecyl fumarate, ethylenically unsaturated dicarboxylic acids such as fumaric acid, maleic acid, itaconic acid, aconitic acid or citraconic acid, and ethylenically unsaturated carboxylic anhydrides, such as maleic, itaconic, aconitic or citraconic anhydride.

The amounts of the monomers which are incorporated in Component D are not important. Preferably, component D contains from 0.05 to 50.0% by mole of the copolymerized comonomers containing carboxylic acid groups and more preferably from 0.1 to 30% by mole.

Such Components D meet the following criteria:

(1) the component is at least partially miscible and preferably fully miscible with the graft comonomers of the graft rubber component; and

(2) the component contains acid functional groups capable of reacting with the amine end groups of the polyamide, and the amount of functional acid groups provided by the fourth component is rather small.

Suitably, Component D has a number average molecular weight of at least 10,000 and preferably at least 21,000 and suitably a weight average molecular weight of at least 20,000 and preferably at least 40,000. While in principle the molecular weight can be extremely high, it is advantageous to have a weight average less than 200,000 to provide ease of processing and blending with the other components of the blend, and preferably less than 100,000. Component D typically has a tensile modulus in the range of from 2.4 to 3.1 GPa (350,000 to 450,000 psi).

A preferred Component D is a terpolymer containing styrene, acrylonitrile, and from 0.1 to 3.0% by mole maleic anhydride or $C_1$ to $C_4$ monoalkyl maleate or fumarate. With such a terpolymer, complete miscibility with the substrate rubber fraction of Component A is obtained when the graft rubber also comprises acrylonitrile in a mole concentration within ±12 percentage units, preferably within ±7 percentage units, of the mole concentration of acrylonitrile and carboxylic acid functional monomer of the Component D. Preferably the carboxylic acid functional monomer is maleic anhydride present in a concentration of from 0.5 to 1.5% by mole of the terpolymer. Another preferred Component D is a terpolymer containing styrene, methyl methacrylate and maleic anhydride, wherein the maleic anhydride is present in the range of from 15 to 25% by mole and more preferably from 20 to 25% by mole.

The effective amount of optional Component D in the toughened blend is less than 39% by weight. Advantageously, the amount of Component D lies in the range of from 0.006 to 20% by weight of the toughened blend. The actual amount of Component D effective to improve the impact strength of the blend depends on the concentration of the carboxylic acid functional groups in the blend. The higher the concentration of these functional groups, the lower is the effective amount of Component D in the blend.

The precise percentage of the toughened blend to be employed in the blends of the invention is not critical. Percentages from 0.5% by weight up to 50% by weight, based on total blend, of the toughened blend component are suitable, with 5% to 30% by weight being the preferred concentration.

Toughened polymer blends of the type described in US-A 4,777,211, incorporated herein by reference, are particularly useful in the subject invention. Other toughened blends, for example, those of the type described in US-A 4,713,415, may also be useful in the subject invention. Blends of polyamide and acrylonitrile-butadiene-styrene (ABS) copolymer, which are commercially available, are also particularly useful in the subject invention. These commercial alloys contain an ABS rubber-concentrate dispersed in a polyamide matrix material. The rubber concentrate is made up of a high loading of crosslinked polybutadiene rubber particles chemically grafted to a styrene-acrylonitrile (SAN) shell layer. Compatibility is achieved as a result of chemical grafting between the rubber particles and the SAN shell and between the SAN shell and the polyamide matrix.

The optional, third polymeric component of the blend compositions of the invention, present as a minor component if present at all, is an acidic polymer containing moieties of an α-olefin and an α,β-ethylenically unsaturated carboxylic acid, optionally polymerized with a third monomer and optionally having a portion of the carboxylic acid groups neutralized with non-alkali metal. The α-olefin monomer of this optional blend component is an α-olefin, suitably, of up to 10 carbon atoms inclusive such as ethylene, propylene, 1-butene, isobutylene, 1-octene and 1-decene. Preferred α-olefins are straight chain α-olefins of up to 4 carbon atoms inclusive and most preferred is ethylene. The α-olefin monomer of this optional blend component is present in at least 65% by mole based on total component and is preferably present in at least 80% by mole on the same basis.

The ethylenically unsaturated carboxylic acid monomer is an α,β-ethylenically unsaturated carboxylic acid, suitably, of up to 10 carbon atoms inclusive and is illustrated by acrylic acid, 2-hexenoic acid and 2-octenoic acid. The preferred α,β-ethylenically unsaturated carboxylic acids have up to 4 carbon atoms inclusive. These acids are acrylic acid, methacrylic acid and crotonic acid, of which acrylic acid and methacrylic acid are particularly preferred. The unsaturated acid monomer of the optional third polymeric blend component is suitably present in an amount from 1% by weight to 35% by weight based on total blend component, and amounts of from 5% by mole to 20% by mole on the same basis are preferred.

It may be useful to incorporate in the acidic polymeric optional component (3) as an optional third monomer a non-acidic, low molecular weight polymerizable monomer, preferably, of up to 8 carbon atoms inclusive. Such an optional monomer may be another α-olefin such as propylene or styrene, an unsaturated ester such as vinyl acetate, methyl acrylate or ethyl methacrylate, an unsaturated halohydrocarbon such as vinyl fluoride or vinyl chloride, or an unsaturated nitrile such as acrylonitrile. As previously stated, the presence of this third monomer is optional and is not required. Amounts of the third monomer up to 5% by mole, based on total optional component polymer (3) are suitable, with amounts up to 3% by mole on the same basis being preferred.

Independent of whether the polymer of the optional component (3) is a copolymer or a terpolymer, in an optional embodiment of the third polymeric blend component a portion of the carboxylic acid groups is neutralized with non-alkali metal. When partially neutralized, this optional blend component is polymeric in form while exhibiting ionic character and is conventionally referred to as a metal ionomer. In the partially neutralized embodiment of the optional component (3) the α-olefin/unsaturated carboxylic acid polymer, with or without the optional third monomer, is reacted with a source of ionizable zinc, aluminium or magnesium compound sufficient to neutralize from 10% to 90%, preferably from 20% to 80%, of the carboxylic acid groups present in the polymer. Such neutralization, particularly with zinc as the preferred metal, results in a uniform distribution of metal throughout the polymer. The ionizable metal compound utilized in the neutralization is a source of complexed or uncomplexed non-alkali metal ions including zinc, aluminium or magnesium ions which are provided in compounds of the type known as metal salts, e.g., uncomplexed metal ion salts such as zinc acetate, zinc chloride or zinc formate, or complexed metal ion salts in which the metal is bonded to two types of groups, at least one of which is readily ionizable and the other is not. Illustrative of such complexed metal ion salts are mixed zinc salts with one weak acid such as oleic acid or stearic acid and one more ionizable acid such as acetic acid or formic acid. In general, neutralization with a complexed non-alkali metal ion is preferred.

The optionally partially neutralized polymers employed as the optional component (3) are broadly conventional and many are commercially available. The amount of the optional component (3) will suitably be up to 10% by weight based on the total polymer blend. Amounts of the optional blend component up to 5% by weight on the same basis are preferred. Generally they are added as a processing aid.

The blends of the invention may also include conventional additives such as antioxidants and stabilizers, fillers and fire resistant materials, mould release agents, colorants and materials designed to improve the processability of the polymers or the properties of the resulting blend. Such additives are added by conventional methods prior to, together with or subsequent to the blending of the polyketone and the toughened blend.

The method of producing the blends of the invention is not material so long as a uniform blend is produced without undue degradation of the blend or its components. In one modification the polymer components of the blend are extruded in a corotating twin screw extruder to produce the blend. In an alternate modification, the polymer components are blended in a mixing device which exhibits high shear. The blends are processed by conventional methods such as extrusion and injection moulding into sheets, films, plates and shaped parts. Illustrative of such applications are the production of internal and external parts for automotive use.

The blends of the invention are uniform mixtures which exhibit better mechanical properties than the components alone. The blends are particularly characterized by improved toughness without undue loss of strength. The blends of the subject invention are morphologically complex. The observed morphology is consistent with a hypothesis that the polyamide blend component of the toughened blend compatibilizes and promotes the dispersion of the substrate rubber in the graft rubber component of the toughened blend within a polyketone matrix. It is speculated that the known chemical affinity of the polyketone polymer for polyamide creates a fine dispersion of the substrate rubber within a polyketone matrix. When a certain commercially available material is used as the toughened blend, blending it with polyketone results in a complex material which contains at least six distinct phases.

The invention is further illustrated by the following Examples.

Example 1

A linear alternating terpolymer of carbon monoxide, ethylene, and propylene was produced in the presence of a catalyst composition formed from palladium acetate, trifluoroacetic acid and 1,3-bis[bis(2-methoxyphenyl)phosphino]propane. The polyketone polymer had a melting point of 223°C and an LVN of 1.78 dl/g. The polyketone polymer also contained 1 pph of a commercially available copolymer of ethylene and methacrylic acid, added as a processing aid.

Example 2

Blends were prepared of the polyketone terpolymer of Example 1 and a commercially available polyamide 6/ABS thermoplastic alloy indicated hereinafter as "alloy 1180". The blends prepared are shown in Table 1. The blends were compounded on a 30 mm co-rotating twin screw extruder. Subsequent to blending, specimens of the blends were injection moulded on a 25 ton moulding machine. Moulded specimens were stored over desiccant until tested. Mechanical testing was performed on "dry as moulded"

specimens.

TABLE I

Blend Compositions (wt%)

| Sample | Polyketone Polymer | Alloy 1180 |
|---|---|---|
| A* | 100 | 0 |
| B | 90 | 10 |
| C | 80 | 20 |
| D | 70 | 30 |
| E | 60 | 40 |
| F | 50 | 50 |
| G* | 0 | 100 |

* Comparative Example

Impact properties of the samples are shown in Table 2. The data indicate that alloy 1180 is an effective toughener for the polyketone polymer. Notched Izod values of the polyketone polymer at both 23°C and -29°C increase steadily with alloy 1180 content. Izod values greater than 100 J/m (about 20 ft-lb/in) are obtained with alloy 1180 levels of 20 wt% or more at room temperature, and exceed the value for alloy 1180 alone at levels of 30 wt% or more. The increase in Izod values with increasing alloy 1180 content indicates a decrease in the notch sensitivity of the blends, which is desirable in certain applications. Gardner impact values measured at -30°C decrease with increasing alloy 1180 content.

TABLE 2

Impact Properties

| Sample | Notched Izod (J/m) 23°C | Notched Izod (J/m) -29°C | Notched Izod (ft-lb/in) 23°C | Notched Izod (ft-lb/in) -29°C | Gardner Impact (J) -30°C | Gardner Impact (in-lb) -30°C |
|---|---|---|---|---|---|---|
| A* | 250 | 79.0 | 4.69 | 1.48 | 24.6 | 218 |
| B | 323 | 86.5 | 6.04 | 1.62 | 8.8 | 78 |
| C | 1072 | 112 | 20.08 | 2.09 | 9.4 | 83 |
| D | 1479 | 148 | 27.69 | 2.77 | 7.1 | 63 |
| E | 1468 | 147 | 27.49 | 2.75 | 2.0 | 18 |
| F | 1474 | 194 | 27.61 | 3.63 | 1.0 | 9 |
| G* | 1307 | 244 | 24.48 | 4.56 | 11.4 | 101 |

*Comparative Example

Tensile properties of the samples are shown in Table 3. The tensile modulus is defined as the secant modulus at 1% strain. The tensile modulus of the polyketone polymer increases with the addition of alloy 1180, and reaches values greater than that of alloy 1180 alone in blends of 30 wt% or more alloy 1180. The yield stress of the polyketone polymer decreases slightly with the addition of alloy 1180, approaching the value for that of alloy 1180 alone. Ultimate elongation remains high, although no clear trend is seen with composition. The simultaneous increase in modulus and Izod impact strength upon blending is a very unusual and attractive feature of this blend system.

TABLE 3

Tensile Properties

| Sample | Tensile Modulus* (GPa) | (psi) | Yield Stress (MPa) | (psi) | Elongation (%) |
|---|---|---|---|---|---|
| A** | 1.62 | 235,000 | 60.7 | 8810 | 267 |
| B | 1.64 | 238,000 | 55.5 | 8060 | 91 |
| C | 1.71 | 248,000 | 52.8 | 7660 | 185 |
| D | 1.81 | 262,000 | 50.0 | 7240 | 351 |
| E | 1.92 | 279,000 | 50.9 | 7383 | 284 |
| F | 1.85 | 268,000 | 47.6 | 6905 | 288 |
| G** | 1.74 | 253,000 | 45.7 | 6640 | 124 |

* secant modulus at 1% strain

** Comparative Example

Example 3

Blends were prepared as described in Example 2, using both short (about 20 seconds) and long (about 2 minutes) cycles on the 25 ton injection moulding machine. The longer cycle time was found to have a beneficial effect on toughness of the polyketone blends. Notched Izod values for polyketone/alloy 1180 blends prepared using both short and long times are shown in Table 4. High toughness is achieved with only 10% alloy 1180 if long cycle times are used.

TABLE 4

| | Notched Izod Values* | | | |
|---|---|---|---|---|
| | (J/m) | | (ft-lb/in) | |
| | Cycle Time | | Cycle Time | |
| Sample | 20 sec. | 2 min | 20 sec. | 2 min |
| A** | 250 | 304 | 4.69 | 5.7 |
| B | 323 | 1360 | 6.04 | 25.47 |
| C | 1072 | 1565 | 20.08 | 29.30 |
| D | 1479 | 1653 | 27.69 | 30.95 |
| G** | 1307 | 1373 | 24.48 | 25.71 |

* at 23°C

** Comparative Example

## Claims

1. A polymer blend composition characterized by comprising:
(1) a linear alternating polymer of carbon monoxide and at least one ethylenically unsaturated compound;
(2) a toughened polymer blend including:
(A) a graft rubber composition comprising a substrate rubber having a glass transition temperature below 0°C and monomers comprising a vinyl aromatic monomer and one or more polar monomers selected from the group consisting of $C_1$ to $C_4$ alkyl acrylates, $C_1$ to $C_4$ alkyl methacrylates, methacrylonitrile and acrylonitrile, said monomers having been polymerized in the presence of and grafted on to the substrate rubber;
(B) a polyamide;
(C) a carboxylic acid containing ethylene/alkyl acrylate copolymer rubber having a glass transition temperature below 20°C; and, optionally,
(D) a carboxylic acid containing terpolymer having a glass transition temperature above 0°C; and optionally,
(3) a minor portion of an acidic polymer incorporating moieties of an $\alpha$-olefin, an $\alpha,\beta$-ethylenically unsaturated carboxylic acid and optionally a non-acidic, low molecular weight polymerizable monomer, the acidic polymer optionally having a portion of the carboxylic acid groups neutralized with non-alkali metal.

2. A composition as claimed in claim 1, characterized in that the toughened polymer blend includes
(A) a graft rubber composition comprising from 5 to 80 weight percent of the substrate rubber having a glass transition temperature below 0°C and from 95 to 20 weight percent of the monomers comprising, per 100 parts by weight of the monomers, from 20 to 75 parts by weight of a vinyl aromatic monomer and from 80 to 25 parts by weight of the polar monomer(s) selected from the group consisting of $C_1$ to $C_4$ alkyl acrylates, $C_1$ to $C_4$ alkyl methacrylates, methacrylonitrile and acrylonitrile, said monomers having been polymerized in the presence of and grafted on to the substrate rubber;
(B) a polyamide;
(C) a carboxylic acid containing ethylene/alkyl acrylate copolymer rubber having a glass transition

temperature below 0°C, said rubber consisting of ethylene, $C_1$ to $C_4$ alkyl acrylate and 0.5 to 25 mole percent of an interpolymerized carboxylic acid containing monomer selected from acrylic acid, methacrylic acid, ethylenically unsaturated dicarboxylic acids and anhydrides and $C_1$ to $C_{12}$ monoalkyl esters of ethylenically unsaturated dicarboxylic acids and, optionally,

(D) a carboxylic acid containing terpolymer having a glass transition temperature above 0°C and consisting of a vinyl aromatic monomer, one or more polar monomers selected from the group consisting of $C_1$ to $C_4$ alkyl acrylates, $C_1$ to $C_4$ alkyl methacrylates, methacrylonitrile and acrylonitrile, and from 0.05 to 50 mole percent of one or more carboxylic acid functional comonomer units selected from acrylic acid, methacrylic acid, ethylenically unsaturated dicarboxylic acids and anhydrides and $C_1$ to $C_{12}$ monoalkyl esters of ethylenically unsaturated dicarboxylic acids; wherein the weight ratio of component (A) to component (B) is in the range of from 1:9 to 9:1, wherein the sum of components (A) and (B) is at least 60 wt% of the toughened blend and wherein the amount of component (C) is in the range of from 1 to 40 weight percent of the toughened blend and the amount of component (D) is in the range of from 0 to 39 weight percent of the toughened blend.

**3.** A composition as claimed in claims 1 or 2, characterized in that the linear alternating polymer is represented by the repeating formula

$$-\!\![CO\!-\!(CH_2\!-\!CH_2)]_x\!-\![CO\!-\!(G)]_y\!-$$

wherein G is a moiety of an ethylenically unsaturated hydrocarbon of at least 3 carbon atoms polymerized through the ethylenic unsaturation, x and y are integers, y can be zero, and the ratio of y:x is from 0 to 0.5.

**4.** A composition as claimed in claim 3, characterized in that in the linear alternating polymer G is a moiety of propylene and the ratio of y:x is from 0.01 to 0.1.

**5.** A composition as claimed in any of claims 1-4, characterized in that the substrate rubber of component (A) is polybutadiene or a butadiene copolymer and the monomers grafted thereto are styrene and acrylonitrile, methacrylonitrile, or methyl methacrylate, in that the polyamide of component (B) is selected from the group consisting of polyamide 6, polyamide 6,6, polyamide 6,9 and a copolymer of polyamide 6 and polyamide 6,6, and in that component (C) is a copolymer rubber comprising at least 50 mole percent ethylene, 0.5 to 10 mole percent acrylic acid or monoethyl maleate, and 10 to 49.5 mole percent $C_1$ to $C_4$ alkyl acrylate.

**6.** A composition as claimed in claim 5, characterized in that the graft monomers of component (A) comprise 25 to 50 parts by weight of acrylonitrile and 50 to 75 parts by weight of styrene per 100 parts by weight of the monomers, and in that component (D) contains 0.1 to 30.0 mole percent of the acid-functional comonomer, and is present in an amount from 0.006 to 20 percent by weight of the total blend.

**7.** A composition as claimed in claim 6, characterized in that component (B) is polyamide 6, component (D) is a terpolymer of styrene, acrylonitrile and maleic anhydride and the maleic anhydride comprises 0.1 to 3.0 mole percent of the terpolymer, and wherein component (D) is present in an amount from 0.006 to 20 percent by weight of the total blend.

**8.** A composition as claimed in claim 7, characterized in that component (B) is polyamide 6, component (D) is a terpolymer of styrene, methyl methacrylate and maleic anhydride and the maleic anhydride comprises from 15 to 25 mole percent of the terpolymer, and wherein component (D) is present in an amount from 0.006 to 20 percent by weight of the total blend.

**9.** A composition as claimed in any of claims 1-8, characterized in that component (3) is a copolymer of ethylene and acrylic acid or methacrylic acid, and is present in an amount of up to 10 weight percent of the total blend.

**10.** A process for improving the toughness and stiffness of a linear alternating polymer of carbon monoxide

and at least one ethylenically unsaturated compound, characterized by forming a uniform blend thereof with a toughened polymer blend and, optionally, an acidic polymer, the toughened polymer blend and the acidic polymer as being defined in any of claims 1-9.